(19) Europäisches Patentamt
European Patent Office
Office européen des brevets

(11) Veröffentlichungsnummer : **0 431 331 B1**

(12) **EUROPÄISCHE PATENTSCHRIFT**

(45) Veröffentlichungstag der Patentschrift :
**05.05.93 Patentblatt 93/18**

(51) Int. Cl.$^5$ : **C08G 18/79,** C08G 18/16, C08G 18/20

(21) Anmeldenummer : **90121256.3**

(22) Anmeldetag : **07.11.90**

# (54) Hitzehärtbare Stoffmischungen.

(30) Priorität : **17.11.89 DE 3938202**

(43) Veröffentlichungstag der Anmeldung :
**12.06.91 Patentblatt 91/24**

(45) Bekanntmachung des Hinweises auf die Patenterteilung :
**05.05.93 Patentblatt 93/18**

(84) Benannte Vertragsstaaten :
**AT BE CH DE DK ES FR GB IT LI NL SE**

(56) Entgegenhaltungen :
**EP-A- 0 045 995**
**EP-A- 0 269 943**

(73) Patentinhaber : **BASF Aktiengesellschaft**
**Carl-Bosch-Strasse 38**
**W-6700 Ludwigshafen (DE)**

(72) Erfinder : **Blum, Rainer**
**Bannwasserstrasse 58**
**W-6700 Ludwigshafen (DE)**
Erfinder : **Rehmer, Gerd, Dr.**
**Koenigsberger Strasse 1**
**W-6711 Beindersheim (DE)**
Erfinder : **Bruchmann, Bernd, Dr.**
**Giselherstrasse 79**
**W-6700 Ludwigshafen (DE)**

EP 0 431 331 B1

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue Saint-Denis, 75001 PARIS

## Beschreibung

Die vorliegende Erfindung betrifft hitzehärtbare Stoffmischungen auf Basis von desaktivierten Polyisocyanaten und Verbindungen mit mindestens 2 gegenüber Isocyanatgruppen reaktiven Wasserstoffatomen, enthaltend mindestens ein Uretdion als Polyisocyanat oder mindestens ein Polyisocyanat, welches Uretdiongruppen aufweist und mindestens einen Katalysator für die Uretdiongruppenbildung ausgewählt aus aliphatisch substituierten Phosphinen, Aryl-, Alkyl- bzw. Alkylarylphosphiten, Pyridinen, Imidazolen, Morpholinen, Piperazinen, S-haltige Heterocyclen, Hexamethylphosphorigsaüretrisamid und 2-Mercaptochinolin.

Polyisocyanate und Verbindungen mit mindestens 2 gegenüber Isocyanaten reaktiven Wasserstoffatomen können unter Temperaturerhöhung, im allgemeinen in Gegenwart von Katalysatoren, zu den entsprechenden Polymeren umgesetzt werden, wobei eine Aushärtung der Stoffmischung stattfindet. Bei den Polyisocyanaten kann es sich dabei um Di- oder andere Polyisocyanate handeln, die über eine Uretdiongruppenbildung

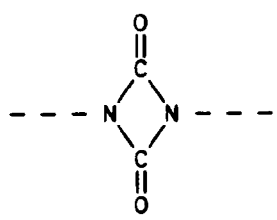

dimerisiert sind bzw. in denen solche Uretdiongruppen vorliegen.

Solche Uretdione bzw. Uretdiongruppen enthaltende Polyisocyanate sind von besonderer Bedeutung für einkomponentige Polyurethansysteme, wie sie in der US-A-4 507 456, der US-A-4 525 570 und der US-A-4 400 497 beschrieben sind. Bei diesen Systemen werden in fester Form vorliegende Polyisocyanate, wobei es sich um Uretdione bzw. Polyisocyanate handeln kann, die Uretdiongruppen enthalten, in Verbindungen, welche mindestens 2 gegenüber Isocyanatgruppen reaktive Wasserstoffatome enthalten, dispergiert. Durch Umsetzung der Polyisocyanate mit geeigneten Stabilisatoren wird ein Teil der reaktiven Isocyanatgruppen an der Oberfläche der Teilchen desaktiviert. Die erhaltenen Dispersionen sind lagerstabil. Nach einer im allgemeinen durch Erwärmen ausgelösten Aktivierung härten diese Systeme zu Polyurethanen aus.

Probleme beim Einsatz von uretdiongruppenhaltigen Polyisocyanaten liegen darin, daß die Uretdiongruppen bei der Polyurethanbildung nicht völlig in die entsprechenden Polyisocyanate zurückspalten. In den Polyurethanmassen verbleibende Uretdiongruppen führen im Laufe der Zeit zu unerwünschten Eigenschaften der fertigen Polyurethanmassen. Die Uretdiongruppen spalten im Laufe der Zeit auch bei Raumtemperatur zurück, so daß freie Isocyanatgruppen im Polyurethan vorliegen.

Außerdem ist es aus wirtschaftlichen Gründen erwünscht, daß alle Uretdiongruppen in Isocyanatgruppen zurückspalten und so für die Aushärtungsreaktion zur Verfügung stehen.

Aufgabe der vorliegenden Erfindung war es daher, in den hitzehärtbaren Stoffmischungen der genannten Art möglichst weitgehende Rückspaltung der Uretdione in die entsprechenden Polyisocyanate bei der Aushärtung zu bewirken.

Demgemäß wurden die hitzehärtbaren Stoffmischungen auf Basis von (desaktivierten) Polyisocyanaten und Verbindungen mit mindestens 2 gegenüber Isocyanatgruppen reaktiven Wasserstoffatomen, enthaltend mindestens ein Uretdion als Polyisocyanat oder mindestens ein Polyisocyanat, welches Uretdiongruppen aufweist und mindestens einen an sich bekannten Katalysator für die Uretdiongruppenbildung gefunden.

Überraschenderweise werden bei der Aushärtung der erfindungsgemäßen Stoffmischungen Polyurethanmassen oder -überzüge erhalten, die weitgehend frei von Uretdiongruppen sind.

Uretdiongruppen enthaltende Polyisocyanate werden durch Zusammenlagerung zweier Isocyanatgruppen von Di- bzw. Polyisocyanaten in Gegenwart eines Katalysators erhalten. Für die hitzehärtbaren Stoffmischungen sind Uretdione bzw. Uretdiongruppen enthaltende Polyisocyanate geeignet, die bei Raumtemperatur in fester Form vorliegen und in den Verbindungen mit 2 reaktiven Wasserstoffatomen im wesentlichen unlöslich oder nur in untergeordneten Mengen löslich sind. Eingesetzt werden daher vorzugsweise Uretdiongruppen enthaltende Polyisocyanate auf Basis von 1,6-Hexan-diisocyanat, 1-Isocyanato-3,3,5-trimethyl-5-isocyanatomethylcyclohexan, 2,3,5,6-Tetramethyl-1,4-xylylen-diisocyanaat, 2,4'-, 4,4'-Diisocyanato-diphenylmethan und insbesondere 2,4- und/oder 2,6-Diisocyanato-toluol.

Die hitzehärtbaren Stoffmischungen können neben den genannten Uretdionen oder Uretdiongruppen enthaltenden Polyisocyanaten weitere in fester Form vorliegende Polyisocyanate enthalten, welche ebenfalls in den Verbindungen mit mindestens 2 gegenüber Isocyanatgruppen reaktiven Wasserstoffgruppen weitgehend

unlöslich sind.

Bevorzugt handelt es sich bei den Polyisocyanaten der hitzehärtbaren Stoffmischungen vorwiegend um Uretdione oder Polyisocyanate, welche Uretdiongruppen aufweisen.

Die Polyisocyanate liegen bei den hitzehärtbaren Stoffmischungen in Form fester Teilchen in Verbindungen mit mindestens 2 gegenüber Isocyanatgruppen reaktiven Wasserstoffatomen vor. Der Teilchendurchmesser der diskreten Polyisocyanatteilchen beträgt 0,1 bis 150, vorzugsweise 1 bis 50 µm.

Als Verbindungen mit mindestens 2 gegenüber Isocyanatgruppen reaktiven Wasserstoffatomen kommen Verbindungen in Frage wie sie in der US-A-4 400 497 oder US-A-4 507 456 aufgeführt wird.

Geeignet sind z.B. Polyester- und Polyetherpolyole. Polyester-polyole können beispielsweise aus organischen Dicarbonsäuren mit 2 bis 12 Kohlenstoffatomen, vorzugsweise aliphatischen Dicarbonsäuren mit 4 bis 6 Kohlenstoffatomen und mehrwertigen Alkoholen, vorzugsweise Diolen, mit 2 bis 12 Kohlenstoffatomen, vorzugsweise 2 bis 6 Kohlenstoffatomen hergestellt werden. Als Dicarbonsäuren kommen beispielsweise in Betracht: Bernsteinsäure, Glutarsäure, Adipinsäure, Korksäure, Azelainsäure, Sebacinsäure, Decandicarbonsäure, Maleinsäure und Fumarsäure. Die Dicarbonsäuren können dabei sowohl einzeln als auch im Gemisch untereinander verwendet werden. Anstelle der freien Dicarbonsäuren können auch die entsprechenden Dicarbonsäurederivate, wie z.B. Dicarbonsäureester von Alkoholen mit 1 bis 4 Kohlenstoffatomen oder Dicarbonsäureanhydride eingesetzt werden. Vorzugsweise verwendet werden Dicarbonsäuregemische aus Bernstein-, Glutar- und Adipinsäure in Mengenverhältnissen von beispielsweise 20-35 : 35-50 : 20-32 Gew.-Teilen, und insbesondere Adipinsäure. Beispiele für zwei- und mehrwertige Alkohole, insbesondere Diole sind: Ethandiol, Diethylenglykol, 1,2- bzw. 1,3-Propandiol, Dipropyenglykol, 1,4-Butandiol, 1,5-Pentandiol, 1,6-Hexandiol, 1,10-Decandiol, Glycerin und Trimethylolpropan. Vorzugsweise verwendet werden Ethandiol, Diethylenglykol, 1,4-Butandiol, 1,5-Pentandiol, 1,6-Hexandiol oder Mischungen aus mindestens zwei der genannten Diole, insbesondere Mischungen aus 1,4-Butandiol, 1,5-Pentandiol und 1,6-Hexandiol. Eingesetzt werden können ferner Polyester-polyole aus Lactonen, z.B. ε-Caprolacton, oder Hydroxycarbonsäuren, z.B. ω-Hydroxycapronsäure.

Die Polyesterpolyole besitzen vorzugsweise eine Funktionalität von 2 bis 3 und ein Molekulargewicht von 1.000 bis 3.000 und vorzugsweise 1.800 bis 2.500.

Insbesondere als Polyole vewendet werden jedoch Polyetherpolyole, die nach bekannten Verfahren, beispielsweise durch anionische Polymerisation mit Alkalihydroxiden, wie Natrium- oder Kaliumhydroxid, oder Alkalialkoholaten, wie Natriummethylat, Natrium- oder Kaliumethylat oder Kaliumisopropylat als Katalysatoren oder durch kationische Polymerisation mit Lewis-Säuren, wie Antimonpentachlorid, Borfluorid-Etherat u.a. oder Bleicherde als Katalysatoren aus einem oder mehreren Alkylenoxiden mit 2 bis 4 Kohlenstoffatomen im Alkylenrest und gegebenenfalls einem Startermolekül, das 2 bis 8, vorzugsweise 2 bis 4, reaktive Wasserstoffatome gebunden enthält, hergestellt werden.

Geeignete Alkylenoxide sind beispielsweise Tetrahydrofuran, 1,3-Propylenoxid, 1,2- bzw. 2,3-Butylenoxid, Styroloxid und vorzugsweise Ethylenoxid und 1,2-Propylenoxid. Die Alkylenoxide können einzeln, alternierend nacheinander oder als Mischungen verwendet werden. Als Startermoleküle kommen beispielsweise in Betracht: Wasser, organische Dicarbonsäuren, wie Bernsteinsäure, Adipinsäure, Phthalsäure und Terephthalsäure, aliphatische und aromatische, gegebenenfalls N-mono-, N,N- und N,N'-dialkylsubstituierte Diamine mit 1 bis 4 Kohlenstoffatomen im Alkylrest, wie gegebenenfalls mono- und dialkylsubstituiertes Ethylendiamin, 1,4-Butylendiamin, 1,2-, 1,3-, 1,4-, 1,5- und 1,6-Hexamethylendiamin, Phenylendiamine, 2,4- und 2,6-Toluylendiamin und 4,4'-, 2,4'- und 2,2'-Diamino-diphenylmethan.

Als Startermoleküle kommen ferner in Betracht Alkanolamine, wie Ethanolamin, Diethanolamin, N-Methyl- und N-Ethyl-ethanolamin, N-Methyl- und N-Ethyl-diethanolamin und Triethanolamin und Ammoniak. Vorzugsweise verwendet werden mehrwertige, insbesondere zwei- und/oder dreiwertige Alkohole, wie Ethandiol, Propandiol-1,2 und -1,3, Diethylenglykol, Dipropylenglykol, Butandiol-1,4, Hexandiol-1,6, Glycerin, Trimethylol-propan, Pentaerythrit, Sorbit, Sucrose und Saccharose.

Die Polyetherpolyole, vorzugsweise Polyoxypropylen-, Polyoxypropylenpolyoxyethylen-polyole und Polyoxytetramethylen-glykole, besitzen vorzugsweise eine Funktionalität von 2 bis 4 und Molekulargewichte von 250 bis 8.500, vorzugsweise 600 bis 5.600 und insbesondere 1.800 bis 4.000. Sie können ebenso wie die Polyesterpolyole einzeln oder in Form von Mischungen verwendet werden. Ferner können sie mit den Polyesterpolyolen sowie den hydroxylgruppenhaltigen Polyesteramiden, Polyacetalen, Polycarbonaten und/oder Polyetherpolyaminen gemischt werden.

Die Mengen der Verbindungen mit mindestens 2 gegenüber Isocyanat reaktiven Wasserstoffatomen bezogen auf das Polyisocyanat sind im allgemeinen so gewählt, daß das Verhältnis der Isocyanatgruppen zu mit Isocyanat reaktiven Wasserstoffatomen 0,5:1 bis 1:0,5, vorzugsweise 0,9:1 bis 1:0,9 beträgt.

Die in den Verbindungen mit mindestens 2 gegenüber Isocyanatgruppen reaktiven Waqsserstoffatomen dispergiert vorliegenden Polyisocyanatteilchen sind an ihrer Oberfläche desaktiviert. Durch die Desaktivierung werden lagerstabile Dispersionen erhalten. Erst unter Hitzeinwirkung wird die durch die Desaktivierung

bewirkte Phasentrennung aufgehoben und die Isocyanatgruppen reagieren mit den Verbindungen, welche mit Isocyanat reaktive Wasserstoffatome aufweisen.

Das Desaktivierungsmittel wird hierzu zweckmäßigerweise so gewählt, daß es an der Oberfläche der Polyisocyanatteilchen durch chemische oder physikalische Kräfte gebunden ist und auf diese Weise eine Phasentrennung bewirkt wird.

Für die chemische Desaktivierung werden 0,01 bis 20, vorzugsweise 0,1 bis 10 und insbesondere 0,3 bis 5 Äquivalentprozent der insgesamt vorhandenen Isocyanatgruppen mit dem Desaktivierungsmittel zur Reaktion gebracht.

Als Desaktivierungsmittel kommen z.B. Wasser, primäre oder sekundäre aliphatische Mono- oder Polyamine, Mono- oder Polyalkohole in Frage. Desaktivierungsmittel und die Durchführung der Desaktivierung sind ausführlich in den US-A-4 507 456, der US-A-4 525 570 und der US-A-4 400 497 beschrieben und nicht Gegenstand dieser Erfindung.

Die erfindungsgemäßen hitzehärtbaren Stoffmischungen enthalten mindestens einen an sich bekannten Katalysator für die Uretdiongruppenbildung. Als Katalysatoren für die Uretdiongruppenbildung sind bekannt aliphatisch substituierte Phosphine, wie z.B. Tri-n-butylphosphin, Dialkylarylphosphine, wie z.B. Diethylphenylphosphin, Aryl-, Alkyl- bzw. Alkylarylphosphite, wie z.B. Triphenylphosphit, Triethylphosphit, Trimethylphosphit, gegebenenfalls substituierte Pyridine, Imidazole, Morpholine und Piperazine, z.B. Dialkylpiperazin, 2-Mercaptopyridin, 1-Methylpyridin-2-thion, 1-Phenylpyridin-4-thion, 1,4,6-Trimethylpyrimidin-2-thion, schwefelhaltige Heterocyclen wie Thiophen und weitere Verbindungen, z.B. Hexamethylphosphorigsäuretrisamid sowie 2-Mercaptochinolin.

In der hitzehärtbaren Stoffmischung werden Tri-n-butylphosphin, Diethylphenylphosphin, Triphenylphosphit, Triethylphosphit, Trimethylphosphit, Imidazole der Formel

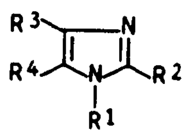

I,

wobei $R^1$ bis $R^4$ unabhängig voneinander ein H-Atom, ein Halogenatom, eine Amino- oder Nitrogruppe, eine durch ein oder zwei $C_1$-$C_{10}$-Alkylgruppen substituierte Aminogruppe, oder ein $C_1$-$C_{16}$-Alkyl-, -Alkenyl-, -Alkinyl-, -Alkoxy-, -Aryl-, -Alkylaryl, -Alkylthio oder -Aralkylrest sein können, und Benzimidazole der Formel

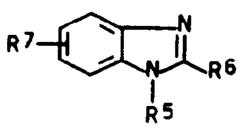

II,

wobei $R^5$ bis $R^7$ unabhängig voneinander die obengenannte Bedeutung von $R^1$ bis $R^4$ haben können, bevorzugt eingesetzt.

Besonders bevorzugt wird 1,2-Dimethylimidazol eingesetzt.

Die Katalysatoren für die Uretdionbildung werden in den erfindungsgemäßen hitzehärtbaren Mischungen vorzugsweise im Gewichtsbereich von 0,05 bis 4,0 Gew.-%, bezogen auf das vorhandene Uretdion bzw. Uretdiongruppen enthaltende Polyisocyanat eingesetzt. Besonders bevorzugt werden 0,1 bis 2 Gew.-%, ganz besonders bevorzugt 0,2 bis 1 Gew.-% eingesetzt.Sie können zu einem beliebigen Zeitpunkt vor der Verarbeitung, bzw. der Hitzehärtung zu der Dispersion der desaktivierten Polyiscyanatteilchen gegeben werden.

Der Katalysator für die Uretdiongruppenbildung kann auch zunächst in einem Teil der für die hitzehärtbaren Stoffmischungen eingesetzten Verbindungen mit mindestens 2 gegenüber Isocyanatgruppen reaktiven Wasserstoffatomen gelöst werden. Auf diese Weise ist eine Vorratslösung des Katalysators erhältlich.

Eine solche Vorratslösung kann neben dem Katalysator für die Uretdiongruppenbildung noch weitere Hilfs- und Zusatzstoffe für das hitzehärtbare Stoffgemisch enthalten.

Die erfindungsgemäßen hitzehärtbaren Mischungen können gegebenenfalls weitere Hilfsstoffe wie Kettenverlängerungs- oder Vernetzungsmittel, Katalysatoren für die Polyurethanbildung sowie Zusatzstoffe wie Pigmente, Farbstoffe, Hydrolyseschutzmittel, UV-Stabilisatoren, Antioxidantien und Weichmacher enthalten. Bekannte Katalysatoren für die Polyurethanbildung sind z.B. Aminverbindungen, Metallsalze und metallorganische Verbindungen, zu erwähnen sind besonders Blei-, Zink-, Quecksilber-, Mangan-, Zinn-, Wismut-, Cobalt- und Eisenverbindungen. Besonders bevorzugt sind Eisen-(III)-verbindungen, wie Eisen-(III)-acetyl-acetonat, Eisen-(III)-acetat, Eisen-(III)-chlorid und Eisen-(III)-naphthenat.

Die Härtung der erfindungsgemäßen Stoffmischungen erfolgt im allgemeinen bei Temperaturen zwischen 70 und 180°C. Die erfindungsgemäßen Stoffmischungen können in flüssiger oder pastöser Form verwendet werden und eignen sich als Beschichtungsmittel, Verklebungsmittel und Dichtungsmasse. Bei der Aushärtung werden die Uretdiongruppen weitgehend in Isocyanatgruppen gespalten und stehen dann für die Vernetzungsreaktion zur Verfügung.

Das ausgehärtete Produkt ist dann weitgehend frei von Uretdiongruppen, so daß eine Rückspaltung von Uretdiongruppen in Isocyanatgruppen während der Alterung kaum auftreten kann.

Basisrezeptur für eine hitzehärtbare Stoffmischung (einkomponentiges Polyurethansystem)

| | |
|---|---|
| 215 Teile | Polypropylenoxid-triol, Äquivalentgewicht 2150, (Lupranol® 2042, BASF AG) |
| 30 Teile | Polypropylenoxid-diol, Äquivalentgewicht 1000, (Lupranol® 1000, BASF AG) |
| 1,4 Teile | Polypropylenoxid-triol, Äquivalentgewicht 140, (Lupranol® 3300, BASF AG) |
| 14 Teile | dimerisiertes Toluylendiisocyanat, (Desmodur® TT, Bayer AG) |
| 0,8 Teile | Polyamidamin, Aminzahl ca. 400, (Euretek® 50,5, Schering) |

wurden nacheinander in einem Labordissolver unter leichtem Rühren gemischt und dann 3 Minuten bei max. 30°C mit Drehzahl 2000 dispergiert.

Zur erhaltenen hitzehärtbaren Stoffmischung wurden in den Vergleichsbeispielen 1V und 2V, sowie den Beispielen 1 und 2 jeweils folgende Stoffe zugesetzt:

| | | |
|---|---|---|
| 1V | - | (O-Probe, kein Zusatz) |
| 2V | 0,2 Teile | Eisen-(III)-acetylacetonat |
| 1 | 0,2 Teile | Eisen-(III)-acetylacetonat |
| | 0,5 Teile | 1,2-Dimethylimidazol |
| 2 | 11,5 Teile | einer Lösung aus<br>100 Teilen Polypropylenoxid-triol,<br>5 Teile Eisen-(III)-acetylacetonat<br>10 Teile Hydroxybenzaldehyd,<br>und 5 Teile 1,2-Dimethylimidazol, |

welche durch Rühren bei 60°C in 2 h erhalten wurde. (In der Basisrezeptur wurden nur 205 Teile Polypropylenoxid-triol eingesetzt)

Je 15 g der erhaltenen Stoffmischungen der Beispiele 1, 2, 1V und 2V wurden zur Prüfung auf Blechdeckeln von 80 mm Durchmesser und auf Kaliumbromidpresslingen 15 Minuten bei 140°C im Trockenschrank eingebrannt. Die Preßlinge wurden im IR- auf Vorhandensein der Uretdionabsorption bei 1770 $cm^{-1}$ untersucht. Die Massen auf den Blechdeckeln wurden visuell und manuell geprüft.

| Ergebnisse der Prüfung | | | |
|---|---|---|---|
| Stoffmischung aus | Masse nach einbrennen | Lagerstabilität der Stoffmischung nach 30 Tagen | Uretdion im IR |
| 1V | wachsartig, bröselig, inhomogen anvernetzt | stabil | ja |
| 2V | kompakt, durchvernetzt | stabil | ja |
| 1 | kompakt, homogen vernetzt, gute mechanische Festigkeit | stabil | nein |
| 2 | kompakt, homogen vernetzt, sehr gute mechanische Festigkeit | stabil | nein |

Es zeigt sich, daß bei Stoffmischungen, welche 1,2-Dimethylimidazol enthalten nach Einbrennen der Stoffmischungen keine Uretdiongruppen mehr vorhanden sind.

## Patentansprüche

1. Hitzehärtbare Stoffmischungen auf Basis von desaktivierten Polyisocyanaten und Verbindungen mit mindestens 2 gegenüber Isocyanatgruppen reaktiven Wasserstoffatomen, enthaltend mindestens ein Uretdion als Polyisocyanat oder mindestens ein Polyisocyanat, welches Uretdiongruppen aufweist und mindestens einen Katalysator für die Uretdiongruppenbildung ausgewählt aus aliphatisch substituierten Phosphinen, Aryl-, Alkyl- bzw. Alkylarylphosphiten, Pyridinen, Imidazolen, Morpholinen, Piperazinen, S-haltigen Heterocyclen, Hexamethylphosphorigsäuretrisamid und 2-Mercaptochinolin.

2. Hitzehärtbare Stoffmischungen nach Anspruch 1, enthaltend mindestens einen Katalysator für die Uretdiongruppenbildung ausgewählt aus Imidazolen der Formel

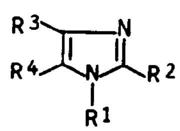

I,

wobei $R^1$ bis $R^4$ unabhängig voneinander ein H-Atom, ein Halogen, eine Amino- oder Nitrogruppe, eine durch ein oder zwei $C_1$-$C_{10}$-Alkylgruppen substituierte Aminogruppe, oder ein $C_1$-$C_{16}$-Alkyl-, -Alkenyl-, -Alkinyl-, -Alkoxy-, -Aryl-, -Alkylaryl, -Alkylthio oder -Aralkylrest sein können, aus Benzimidazolen der Formel

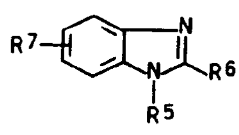

II,

wobei $R^5$ bis $R^7$ unabhängig voneinander die obengenannte Bedeutung von $R^1$ bis $R^4$ haben können, oder den Verbindungen Tri-n-butylphosphin, Diethylphenylphosphin, Triphenylphosphit, Triethylphosphit und Trimethylphosphit.

3. Hitzehärtbare Stoffmischungen nach Anspruch 1, enthaltend 1,2-Dimethylimidazol als Katalysator für die Uretdiongruppenbildung.

4. Hitzehärtbare Stoffmischungen nach Anspruch 1, enthaltend einen Katalysator oder ein Gemisch von Katalysatoren für die Uretdiongruppenbildung in einer Gesamtmenge von 0,2 bis 1 Gew.-%, bezogen auf das in dem hitzehärtbaren Stoffmischung vorhandene Uretdion oder Uretdiongruppen enthaltende Polyisocyanat.

## Claims

1. A thermocurable mixture based on deactivated polyisocyanates and compounds containing at least 2 hydrogen atoms which are reactive towards isocyanate groups, containing at least one uretdione as polyisocyanate or at least one polyisocyanate containing uretdione groups and at least one catalyst for the formation of uretdione groups, selected from aliphatically substituted phosphines, aryl, alkyl or alkylaryl phosphites, pyridines, imidazoles, morpholines, piperazines, S-containing heterocyclic compounds, hexamethylphosphoric triamide and 2-mercaptoquinoline.

2. A thermocurable mixture as claimed in claim 1, containing at least one catalyst for the formation of uretdione groups, selected from imidazoles of the formula

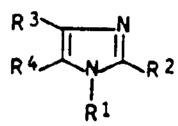

I

where $R^1$ to $R^4$, independently of one another, are H, halogen, amino, nitro, amino which is substituted by one or two $C_1$-$C_{10}$-alkyl groups, or $C_1$-$C_{16}$-alkyl, -alkenyl, -alkynyl, -alkoxy, -aryl, -alkylaryl, -alkylthio or -aralkyl,
benzimidazoles of the formula

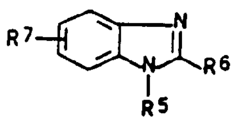

II

where $R^5$ to $R^7$, independently of one another, are as defined above for $R^1$ to $R^4$,
and the compounds tri-n-butylphosphine, diethylphenylphosphine, triphenyl phosphite, triethyl phosphite and trimethyl phosphite.

3. A thermocurable mixture as claimed in claim 1, containing 1,2-dimethylimidazole as catalyst for the formation of uretdione groups.

4. A thermocurable mixture as claimed in claim 1, containing a catalyst or a mixture of catalysts for the formation of uretdione groups in a total amount of from 0.2 to 1% by weight, based on the uretdione or uretdione group-containing polyisocyanate present in the thermocurable mixture.

## Revendications

1. Mélanges de mousse thermodurcissables à base de polyisocyanates désactivés et de composés comprenant au moins deux atomes d'hydrogène réactifs vis-à-vis de radicaux isocyanate, contenant au moins une uretdione à titre de polyisocyanate, ou au moins un polyisocycante qui présente des radicaux uretdione et au moins un catalyseur pour la formation de radicaux uretdione choisi parmi des phosphines aliphatiquement substituées, des aryl, alkyl- ou alkylarylphosphites, des pyridines, des imidazoles, des morpholines, des pipérazines, des composés hétérocycliques contenant du soufre, le trisamide de l'acide hexaméthylphosphoreux et la 2-mercaptoquinoléine.

2. Mélanges de mousses thermodurcissables selon la revendication 1, contenant au moins un catalyseur pour la formation de radicaux uretdione, choisi parmi les imidazoles de la formule

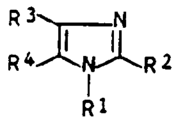 I,

dans laquelle les symboles $R^1$ à $R^4$, représentent indépendamment les uns des autres, chacun un atome d'hydrogène, un atome d'halogène, un radical amino ou nitro, un radical amino substitué par un ou deux radicaux alkyle en $C_1$ à $C_{10}$, ou un radical aralkyle, alkylthio, alkyl aryle, aryle, alcoxy, alkyle, alcényle, alcynyle, en $C_1$ à $C_{16}$, les benzimidazoles de la formule

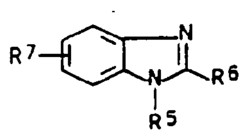 II,

dans laquelle les symboles $R^5$ à $R^7$ possèdent, chacun, indépendamment les uns des autres, la même signification que celle des symboles $R^1$ à $R^4$, ou les composés suivants : tri-n-butylphosphine, diéthylphénylphosphine, phosphite de triphényle, phosphite de triéthyle et phosphite de triméthyle.

3. Mélanges de mousses thermodurcissables selon la revendication 1, qui contiennent le 1,2-diméthylimidazole à titre de catalyseur pour la formation de radicaux uretdione.

4. Mélanges de mousses thermodurcissables selon la revendication 1, qui contiennent un catalyseur ou un mélange de catalyseurs pour la formation de radicaux uretdione, en une proportion totale de 0,2 à 1% en poids, par rapport au polymère contenant des radicaux uretdione ou à l'uretdione présente dans le mélange de mousses thermodurcissables.